(19) Europäisches Patentamt
European Patent Office
Office européen des brevets

(11) **EP 3 706 340 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **20165870.5**

(22) Anmeldetag: **21.11.2012**

(51) Internationale Patentklassifikation (IPC):
**H04J 3/06** *(2006.01)*      **H04L 7/10** *(2006.01)*
**H04L 12/40** *(2006.01)*

(52) Gemeinsame Patentklassifikation (CPC):
**H04J 3/0667**; H04L 7/10; H04L 2012/40267

(54) **VERFAHREN ZUR SYNCHRONISATION VON UHREN IN KNOTEN EINES FAHRZEUGNETZES UND ZUR DURCHFÜHRUNG DES VERFAHRENS EINGERICHTETER KNOTEN**

METHOD FOR SYNCHRONISATION OF CLOCKS IN NODES OF A VEHICLE NETWORK AND NODE ADAPTED TO CARRY OUT THE METHOD

PROCÉDÉ DE SYNCHRONISATION D'HORLOGES DANS DES N UDS D'UN RÉSEAU DE VÉHICULES ET DE MISE EN  UVRE DU PROCÉDÉ DE CONFIGURATION DES N UDS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2011   DE 102011087472**

(43) Veröffentlichungstag der Anmeldung:
**09.09.2020   Patentblatt 2020/37**

(62) Dokumentnummer(n) der früheren Anmeldung(en) nach Art. 76 EPÜ:
**12795766.0 / 2 786 513**

(73) Patentinhaber: **Continental Automotive Technologies GmbH**
**30165 Hannover (DE)**

(72) Erfinder:
• **Nöbauer, Josef**
**65824 Schwalbach a. Ts. (DE)**
• **Zinner, Helge**
**65824 Schwalbach a. Ts. (DE)**

(74) Vertreter: **Continental Corporation**
**c/o Continental Automotive Technologies GmbH**
**Intellectual Property**
**Guerickestraße 7**
**60488 Frankfurt a. Main (DE)**

(56) Entgegenhaltungen:
• **HYUNG-TAEK LIM ET AL: "IEEE 802.1AS time synchronization in a switched Ethernet based in-car network", VEHICULAR NETWORKING CONFERENCE (VNC), 2011 IEEE, IEEE, 14. November 2011 (2011-11-14), Seiten 147-154, XP032081880, DOI: 10.1109/VNC.2011.6117136 ISBN: 978-1-4673-0049-0**
• **HELGE ZINNER ET AL: "A comparison of time synchronization in AVB and FlexRay in-vehicle networks", INTELLIGENT SOLUTIONS IN EMBEDDED SYSTEMS (WISES), 2011 PROCEEDINGS OF THE NINTH WORKSHOP ON, IEEE, 7. Juli 2011 (2011-07-07), Seiten 67-72, XP032024137, ISBN: 978-1-4577-1550-1**
• **TAKAHIDE MURAKAMI ET AL: "Improvement of synchronization accuracy in IEEE 1588 using a queuing estimation method", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12. Oktober 2009 (2009-10-12), Seiten 1-5, XP031570869, ISBN: 978-1-4244-4391-8**
• **DAVID M E INGRAM ET AL: "Use of IEEE 1588â 2008 for a sampled value process bus in transmission substations", INSTRUMENTATION AND MEASUREMENT TECHNOLOGY CONFERENCE (I2MTC), 2011 IEEE, IEEE, 10. Mai 2011 (2011-05-10), Seiten 1-6, XP031957396, DOI: 10.1109/IMTC.2011.5944081 ISBN: 978-1-4244-7933-7**

• AUGUSTO CIUFFOLETTI: "Preventing the Collision of Requests From Slave Clocks in the Precision Time Protocol (PTP)", IEEE TRANSACTIONS ON INSTRUMENTATION AND MEASUREMENT, IEEE SERVICE CENTER, PISCATAWAY, NJ, US, Bd. 60, Nr. 6, 1. Juni 2011 (2011-06-01), Seiten 2096-2103, XP011321743, ISSN: 0018-9456, DOI: 10.1109/TIM.2010.2058584

**Beschreibung**

Die Erfindung betrifft ein Verfahren zur Synchronisation von Uhren in beispielsweise als Steuergeräte ausgebildeten Knoten eines Fahrzeugnetzes eines Kraftfahrzeugs, in dem die Knoten über ein nicht synchronisiertes Kommunikationsprotokoll, beispielsweise ein Bussystem mit einem Ethernet-Protokoll, miteinander kommunizieren, sowie einen zur Durchführung des Verfahrens eingerichteten Knoten.

Bei dem offenbarten Synchronisationsverfahren ist vorgesehen, dass ein Master-Knoten mit einer Master-Uhr Synchronisations-Telegramme aussendet, die in einem Slave-Knoten mit Slave-Uhr ausgewertet werden, wobei der Takt des Slave-Knotens an den Takt des Master-Knotens angepasst wird, insbesondere indem der taktgebende Oszillator der Slave-Uhr bzw. des Slave-Knotens verstellt oder der Takt auf andere Weise, beispielsweise durch Korrekturtakte, angepasst wird. Ferner wird bei einem vorgeschlagenen Verfahren unter Berücksichtigung der Übertragungszeit für ein Telegramm zwischen dem Master-Knoten und dem Slave-Knoten eine Zeitverschiebung zwischen der Master-Uhr und der Slave-Uhr korrigiert.

Die GB 2 246 677 A beschreibt ein synchron auf verschiedenen Wellenlängenkanälen betriebenes optisches Terminal. Bei der Inbetriebnahme sendet das Terminal ein Signal aus, das von einem Sternverbinder an den eigenen Empfänger zurückgesendet wird, um die optische Weglänge von dem Empfänger zu dem Sternverbinder festzustellen, sofern diese nicht bereits bei der Installation festgestellt wurde. Aus der Weglänge und der Kenntnis des differentiellen Zeitversatzes pro Wellenlänge wird für jede Wellenlänge des Receivers der Zeitversatz bestimmt und so ein wellenlängensynchroner Betrieb des Terminals erreicht. Dies ist aber für eine paketvermittelte Datenübertragung aufgrund der dort auftretenden zufälligen Verzögerungen nicht möglich.

Aus der EP 0 016 447 A1 sind ein Verfahren und eine Vorrichtung zur Rekonstruktion von Sprachdaten in einem paketvermitteltem Telekommunikationsnetzwerk bekannt, bei denen der Zeitversatz eines ersten Datenpaktes bei der Übertragung von dem Sender zu dem Empfänger in der aktiven Signalperiode geschätzt wird und diese Schätzung zur Zeitsynchronisation von Sender und Empfänger fortgeführt wird, wobei das Datenpaket von dem Sender für eine von dem geschätzten Zeitversatz abhängige Zeit zwischengespeichert wird, um die Varianz der Datenpakete auf ein Minimum zu reduzieren. Auch hier besteht jedoch das Problem, dass zu Beginn einer Kommunikation die Synchronisation erst auf Basis einer aus dem ersten Datenpaket gewonnenen Schätzung erfolgt und daher vergleichsweise lange dauert.

In dem Beitrag von Zinner et al. "A comparison of time synchronization in AVB and FlexRay in-vehicle networks" (Proceedings of the ninth workshop on Intelligent solutions in embedded systems, 2011) werden die Protokolle AVG und Flexray mit einander verglichen.

Aus der WO2006044139 ist ein Verfahren zum Zeitsynchronisieren von Knoten in einem Switch eines Fahrzeugkommunikationsnetzwerks bekannt, wobei Synchronisationsnachrichten zwischen dem Knoten und benachbarten Knoten geschickt werden.

In einem Beitrag von Murakami et al. "Improvement of synchronization accuracy in IEEE 1588 using a queuing estimation method" (International symposium on precision clock synchronization for measurement, 2009) wird eine Verbesserung der Synchronisation beschrieben.

Aus einem Beitrag von Ingram et al. "Use of IEEE 1588-2008 for a sampled value process bus in transmission substations" (Instrumentation and measurement technology conference (i2mtc), 2011) is bekannt, dass extrem stabile Master-Oszillatoren erforderlich sind, um sicherzustellen, dass die SV-Timing-Anforderungen nach dem Verlust der externen Synchronisation (z.B. GPS) erfüllt werden.

In der US 5,623,483 wird System zum Synchronisieren eines Datenstroms mittels eines Steuerschaltkreises beschrieben, der einen Zwischenspeicher-Schaltkreis zum Verarbeiten und Empfangen eines Datenstroms konfiguriert und einrichtet. Als Initialisierungsparameter werden u. a. eine maximal akzeptable Paketverlustrate und eine maximal akzeptable Verzögerung definiert. Ferner wird eine Paketverzögerungsverteilung konstruiert, die die Wahrscheinlichkeit für eine bestimmte Paketverzögerung auf dem Übertragungsweg wiedergibt. Diese kann als Anfangsnäherung gewählt und im Laufe des Betriebs verfeinert werden. Ein erstes Datenpaket wird in den Zwischenspeicher dann in einer Position eingestellt, die aus einer ermittelten Verzögerung abgeleitet wird. Nachfolgend empfangene Datenpakete, die Angaben zu ihrer Position relativ zu dem ersten Datenpaket enthalten, werden entsprechend in den Speicher einsortiert. Es erfolgt also eine Synchronisation der Datenströme, nicht aber der Zeitgeber bei Sender und Empfänger, auf die es im Rahmen der Übertragung dieser Datenströme nicht ankommt.

Andererseits gibt es Anwendungen, in denen es notwendig ist, eine gemeinsame Zeitbasis zu verwenden, um die zeitliche Synchronität verschiedener Ereignisse (Signale) zu gewährleisten. Ein konkretes Anwendungsbeispiel sind Steuergeräte in einem Kraftfahrzeug, die über Bussysteme vernetzt miteinander kommunizieren.

Die gemeinsame Zeitbasis und damit die zeitliche Synchronität der Knoten bzw. Netzwerke kann dabei grundsätzlich durch das Netzwerk selbst realisiert werden. Hierzu existieren Bussysteme wie FlexRay oder MOST, die derzeit in Kraftfahrzeugen eingesetzt werden und diese gemeinsame Zeitbasis herstellen können. Dabei sind Synchronisationszeiten (ausgehend von einer anfänglichen Un-Synchronität beispielsweise beim Hochstart des Netzwerkes bis zur vollständigen Synchronität) von weniger als 100 ms typisch, wie sie für Anwendungen in Fahrzeugen benötigt werden. Allerdings verfügen nicht sämtliche Netzwerke oder Bussysteme über ein derartiges, per se synchronisiertes Kommunikationsprotokoll. Falls sich die Erstellung der gemeinsamen Zeitbasis nicht durch das Bussystem bzw. Netzwerks als solches erreichen lässt, das zur Kommunikationsverbindung der Steuergeräte bzw. Netzwerkknoten in dem Fahrzeug aufgebaut ist, besteht die Möglichkeit, dies über gesonderte Protokolle zur Zeitsynchronisation zu realisieren.

Ein hierfür besonders geeignetes und weit verbreitetes Protokoll zur Synchronisation von Netzwerkknoten stellt das Precision Time Protocol (PTP) gemäß dem Standard IEEE1588 in den Versionen v1 und v2 sowie das davon abgeleitete IEEE802.1AS-Protokoll dar, mit denen jeweils eine paketbasierte zeitliche Synchronisation zwischen den einzelnen Netzwerkknoten hergestellt werden kann.

Diese Protokolle zur Synchronisation basieren im Wesentlichen darauf, dass eine einzige, auch als Master-Clock bezeichnete Master-Uhr in einem Netzwerk existiert und sich die weiteren Uhren als Slave-Uhren (Slave-Clock) verhalten, die sich auf diese Master-Uhr synchronisieren. Im Hinblick auf die Uhr stellt ein Netzwerkknoten also einen Master-Knoten dar, auf den sich die anderen Knoten des Netzwerks als Slave-Knoten (bezogen auf ihre Uhren) beziehen. Die Master-Uhr ist dabei typischerweise die qualitativ beste Uhr in dem Netzwerk. Bei der Synchronisierung werden der zeitliche Offset der Slave-Uhren zu der Master-Uhr und die Übertragungszeiten zwischen den benachbarten Knoten ermittelt. Diese Werte werden dann zu einer Uhren-Korrektur der Slave-Uhren bzw. Slave-Knoten herangezogen.

Im Gegensatz zu den üblicherweise in Kraftfahrzeugen eingesetzten Bussystemen wie FlexRay oder MOST sind derartige Synchronisationsprotokolle nicht jedoch auf die erstmalige Synchronisation beim Hochstarten (Neustart) des Netzwerkes optimiert, wie es sich beispielsweise bei dem Starten eines Kraftfahrzeugs ergibt. Dadurch sind diese Protokolle derart ausgebildet, dass sie beim Hochstart des Systems deutlich längere Synchronisationszeiten im Sekundenbereich benötigen. Eine Synchronisierung mittels dieser PTP/IEEE802.1AS-Protokolle kann eine Synchronisation von Netzwerkknoten bzw. deren Uhren beim Hochstart bzw. Neustart des Systems mit einer Synchronisationszeit von weniger als einer Sekunde nicht bewältigen.

Auch die in der Automobilindustrie näher in Betracht gezogene Ethernet-Variante "Ethernet AVB", welche das IEEE802.1ASProtokoll verwendet, um Netzwerkknoten, d. h. insbesondere die einzelnen Steuergeräte im Kraftfahrzeug, zu synchronisieren, kann Synchronisationszeiten von weniger als einer Sekunde nicht bewältigen. Wie bereits erwähnt basiert dieses Protokoll darauf, die Übertragungszeiten zwischen den einzelnen Knoten zu messen und diese dann zu einer Uhrenoffset-Korrektur heranzuziehen. Dieses bekannte Verfahren wird in zwei Schritten durchgeführt.

In einem ersten Schritt wird die Differenz der Master-Uhr und der Slave-Uhr gemessen. Hierzu sendet die Master-Uhr Synchronisations-Telegramme aus, die zu einem speziellen Zeitpunkt $t_1$ der Master-Uhr ausgesendet werden, und zu einer Zeit $t_2$ der Slave-Uhr empfangen werden, wobei die Sendezeit $t_1$ der Master-Uhr mit dem Synchronisations-Telegramm (entweder unmittelbar in einem Sync-Telegramm oder einem unmittelbar nachfolgenden Follow-up-Telegramm, die dann gemeinsam das Synchronisationstelegramm bilden) an die Slave-Uhr übertragen wird. Hierdurch, insbesondere durch Auswertung zweier aufeinander folgender Synchronisationstelegramme, lässt sich die Uhrengeschwindigkeit der Slave-Uhr an die Uhrengeschwindigkeit der Master-Uhr anpassen. Diese Messung bzw. Auswertung wird gemäß dem vorgesehenen Standard entsprechend dem IEEE802.1-Protokoll in einem Raster von etwa 7 ms, beispielsweise konkret 7,8125 ms, bis 64 s durchgeführt, in dem die Synchronisationstelegramme ausgesendet werden.

Bei den bekannten Synchronisationsverfahren wird in einem weiteren Schritt der Übertragungsweg zeitlich vermessen, um eine Zeitverschiebung (Offset der Uhren und Delay durch die Übertragung) zwischen der Master-Uhr und der Slave-Uhr korrigieren zu können. Dazu ist vorgesehen, dass die Zweiwege-Verzögerung, d. h. die Zeit für eine Rundsendung von der Slave-Uhr bzw. dem Slave-Knoten zu der Master-Uhr bzw. dem Master-Knoten und zurück, gemessen wird. Hierzu sendet die Slave-Uhr bzw. der Slave-Knoten ein Delay-Request-Telegramm aus, das durch die Master-Uhr bzw. den Master-Knoten empfangen wird. In Reaktion hierauf sendet der Master-Knoten bzw. die Master-Uhr ein Delay-Response-Telegramm aus, welches in dem Delay-Request-Telegramm aussendenden Slave-Knoten empfangen wird. Die jeweiligen Sende- und Empfangszeitpunkte werden in der Slave-Uhr und der Master-Uhr erfasst, so dass es anschießend möglich ist, den durch das Versenden entstandenen Zeitversatz (Delay) und den Offset der Slave-Uhr zu der Master-Uhr zu bestimmen. Hierdurch kann die Zeitverschiebung zwischen den beiden Uhren ermittelt und korrigiert werden.

Allerdings wird dieser vorstehend beschriebene Delay-RequestZyklus zur Korrektur der Zeitverschiebung gemäß der Spezifikation des IEEE802.1AS-Protokolls nur einmal pro Sekunde ausgeführt. Dies führt bei einem Netzwerk mit mehreren Knoten dazu, dass sich die Gesamtsynchronisationszeit pro Knoten jeweils um eine Sekunde erhöhen kann, wenn das Gesamtsystem gestartet wird. Eine häufigere Aussendung dieser Telegramme wird gemäß diesem Protokoll verhindert, da andernfalls die dauernde Belastung des Übertragungskanals in dem Netzwerk zu groß wäre.

Ergänzend ist ein IEEE802.1AS-Netzwerk so eingerichtet, dass es sich selbstständig konfiguriert und segmentiert. In diesem Zusammenhang nutzt jeder an dem Netzwerk teilnehmende Knoten ein sogenanntes "Best Master Clock"-Verfahren (BMC), um eine beste Uhr in dem Netzwerk bzw. dem aktuellen Netzwerksegment festzustellen. Jede Uhr speichert im Rahmen des Precision Time Protocols (PTP) ihre Eigenschaften in einem spezifischen Datensatz ab und teilt diese Eigenschaften den anderen Bus- bzw. Netzwerkteilnehmern in sogenannten Announce-Telegrammen mit. Somit können alle Teilnehmer bzw. Knoten den Datensatz ihrer aktuellen Uhr mit dem Datensatz der aktuellen Master-Uhr in dem Netzwerk vergleichen und die Uhrenkonfiguration selbst einstellen, wobei sich in dem Netzwerk als beste Master-Uhr (Best Master Clock) diejenige Uhr durchsetzt, welche die qualitativ besten Eigenschaften aufweist.

Durch die zyklische Ausführung dieses Best Master ClockVerfahrens mittels Austausch der Announce-Telegramme lassen sich daher auch während der Laufzeit Teilnehmer zuschalten oder entfernen, was auch als hot pluggin bezeichnet wird. Bei dem Neustart (Hochstart) eines Netzes ist aufgrund dieses Best Master Clock-Verfahrens keinem Teilnehmer die beste Uhr bekannt, so dass jeder Teilnehmer (Knoten) davon ausgeht, selbst die beste Uhr zu besitzen, bis er im Rahmen der Announce-Telegramme erfährt, dass die Uhren anderer Teilnehmer bzw. Knoten im Netz qualitativ besser sind und diese als Master-Uhr verwendet.

Die in dem IEEE802.1AS-Protokoll vorgesehene Sendefrequenz beträgt 1 Hz, d. h. die Announce-Telegramme werden in einem Raster von nur einer Sekunde übertragen. Auch dies ist vor dem Hintergrund zu verstehen, dass eine häufigere Übertragung dieser Daten in einem Netzwerk für eine zu große Basisbelastung des Netzwerks im normalen Betrieb führt, so dass die Latenz des Netzwerks für die eigentliche Datenübertragung bei einer höheren Übertragungsrate der Announce-Telegramme zu groß wäre.

HYUNG-TAEK LIM ET AL: "IEEE 802.1AS time synchronization in a switched Ethernet based in-car network", VEHICULAR NETWORKING CONFERENCE (VNC), IEEE; 14. November 2011 (2011-11-14), Seiten 147-154, DOI: 10.1109/VNC.2011.6117136; ISBN: 978-1-4673-0049-0 offenbart Uhrsynchronisierung in einem Fahrzeugnetz.

Weil bei einem Neustart des Netzwerks zunächst die beste Uhr aller Teilnehmer des Systems bestimmt werden muss, um diese als Master-Uhr eines Master-Knotens zu installieren, bestimmt sich die minimale Synchronisationszeit nach der Anzahl der Knoten, da jeder Nachbar seinen Nachbarn zyklisch die Announce-Telegramme übersendet. Pro Knoten in dem Netzwerk dauert die Bestimmung der besten Uhr daher maximal eine Sekunde länger. Dieser Nachteil beim Neustart (Aufstart oder Hochstart) des Netzwerks wird hingenommen, um insgesamt ein flexibles Netzwerk zu haben, das sich seine beste Uhr selbsttätig sucht.

Vor diesem Hintergrund ist es Aufgabe der vorliegenden Erfindung, bei einem Neustart des Netzwerks bzw. Systems die Synchronisationszeiten bei Verwendung eines nicht synchronisierten Kommunikationsprotokolls zu verringern.

Diese Aufgabe wird erfindungsgemäß durch ein Verfahren mit den Merkmalen des Anspruchs 1 und einen insbesondere als Steuergerät ausgebildeten Knoten in einem Fahrzeugnetz gemäß den Merkmalen des Anspruchs 8 gelöst. Ferner wird die Aufgabe durch ein geeignetes Computerprogrammprodukt gemäß Anspruch 9 gelöst, das in einen Knoten eines Netzwerks installierbar ist.

Bei einem vorgeschlagenen Verfahren zur Uhrensynchronisation der eingangsgenannten Art ist insbesondere vorgesehen, dass zumindest für eine erste Synchronisation der Master-Uhr mit einer der gegebenenfalls mehreren Slave-Uhren bzw. mit einer Mehrzahl oder jeder der Slave-Uhren nach dem Starten der Knoten des Fahrzeugnetzes beispielsweise nach dem Einschalten und/oder einem Neustart des Netzwerkes in einem Slave-Knoten eine vorzugsweise für die Übertragung von dem Master-Knoten zu dem speziellen Slave-Knoten spezifische, d. h. von dem Übertragungsweg abhängige, Vorgabe-Übertragungszeit zur Korrektur der Zeitverschiebung zwischen dem Master-Knoten und dem Slave-Knoten verwendet wird. Hierdurch kann bei einem Neustart des Systems der zuvor erwähnte Delay-Request-Zyklus, bei welchem die Rundsendung eines Telegramms als Delay-RequestTelegramm und Delay-Response-Telegramm ausgewertet wird, zunächst weggelassen werden, um eine schnelle Synchronisation der Master-Uhr mit der Slave-Uhr zu erreichen. Dies kann für einen ersten Synchronisationszyklus oder mehrere Synchronisationszyklen erfolgen, vorzugsweise solange, bis eine sichere Synchronisation von Master-Uhr und Slave-Uhr erreicht ist. Diesem Vorschlag liegt die Erkenntnis zugrunde, dass sich die Konfiguration des Kraftfahrzeugs und der in dem Fahrzeugnetz (nachfolgend auch nur als Netzwerk bezeichnet) in der Regel nicht dynamisch verändert und die Übertragungszeiten der Nachrichten bzw. Telegramme, die zur Zeitsynchronisation verwendet werden, über die gesamte Lebensdauer des Fahrzeugs nahezu konstant sind. Insofern ist es möglich, eine Vorgabe-Übertragungszeit zu verwenden und zumindest die erste Synchronisationszeit auf dem Austausch der Synchronisations-Telegramme zu beschränken und für die weitere Synchronisation fest gespeicherte VorgabeÜbertragungszeiten zur Berechnung zu verwenden.

Bei dem erfindungsgemäß vorgeschlagenen Verfahren zur Uhrensynchronisation der eingangsgenannten Art ist insbesondere vorgesehen, dass vorzugsweise nach Erhalt eines Synchronisations-Telegramms von dem Slave-Knoten ein Delay-Request-Telegramm ausgesendet wird, dessen Empfangszeit in dem Master-Knoten erfasst und von dem Master-Knoten als Delay-Response-Telegramm an den Slave-Knoten zurückgesendet wird, in welchem Slave-Knoten dann die Übertragungszeit für ein Telegramm zwischen dem Master-Knoten und dem Slave-Knoten bestimmt wird, wobei die Sendefrequenz der Delay-Request-Telegramme der Sendefrequenz der Synchronisations-Telegramme zumindest für einen vorgegebenen Zeitraum nach dem Starten der Knoten des Fahrzeugs entspricht. Dieses Aussenden eines Delay-Request-Telegramms und das Empfangen des Delay-Response-Telegramms, was nachfolgend gemeinsam auch als Delay-Request-Zyklus bezeichnet wird und der Ermittlung der Übertragungszeit einer Nachricht durch eine Rundsendung zwischen einem Slave-Knoten und dem Master-Knoten entspricht, verkürzt die Synchronisationszeit erheblich, da die gemäß dem Protokoll vorgesehene Aussendefrequenz von 1 Hz deutlich erhöht wird. Dies ist erfindungsgemäß bei dem Neustart des Systems nicht weiter schädlich, da bis zur Synchronisation der Netzwerkknoten in dem Fahrzeugnetz bzw. Netzwerk ohnehin keine andere inhaltliche Information ausgetauscht werden kann. Daher kann die gesamte oder ein wesentlicher Teil der verfügbaren Übertragungskapazität nach dem Neustart eines Fahrzeugnetzes zunächst darauf verwendet werden, die einzelnen Teilnehmer bzw. Knoten des Fahrzeugnetzes in einen betriebsfähigen Zustand zu versetzen, zu dem es auch gehört, dass sämtliche Uhren der Knoten bzw. Teilnehmer des Netzwerkes synchronisiert sind.

Während normalerweise, nach dem Standard IEEE1588 bzw. dem darauf aufbauenden Standard IEEE802.1AS, den auch das sogenannte "Ethernet AVB"-Protokoll verwendet, die SynchronisationsTelegramme entsprechend einem typischen Raster von 10 oder 100 ms ausgesandt werden und der Delay-Request-Zyklus dagegen nur mit einer Frequenz von 1 Hz ausgesendet wird, wird erfindungsgemäß für die Durchführung des Delay-Request-Zyklus eine erhöhte Frequenz für einen vorgegebenen kurzen Zeitraum vorgeschlagen, der sehr kurz ist bezogen auf die normale Betriebszeit des Fahrzeugnetzes während einer Fahrt eines Kraftfahrzeugs. Der vorgegebene Zeitraum kann beispielsweise eine Zeit von 1 bis 100 Sekunden, vorzugsweise etwa 2 bis 10 Sekunden betragen.

Dies ist insbesondere in Kombination mit der Verwendung der in der ersten beschriebenen Vorgabe-Übertragungszeit sinnvoll, um unmittelbar eine erste Synchronisation der Uhren zu erreichen, so dass durch den nachfolgenden Delay-Request-Zyklus lediglich noch vergleichsweise kleinere Korrekturen der Synchronisation vorgenommen werden müssen, die in der Regel in kürzerer Zeit von statten gehen als eine vollständige Neuermittlung der Synchronisation.

Gemäß einer besonders bevorzugten Ausführungsform des vorgeschlagenen Verfahrens kann die Vorgabe-Übertragungszeit in einem vorausgegangenen Betrieb, insbesondere wie vorbeschrieben durch Aussenden eines Delay-Request-Telegramms durch den Slave-Knoten und Auswerten dessen Empfangszeit in dem Master-Knoten gemessen und in dem Slave-Knoten, d. h. einer Rechen- und Speichereinrichtung des Slave-Knotens, gespeichert worden sein. Die Ermittlung der Vorgabe-Übertragungszeit kann also in einem vorangegangenen Einschaltzyklus ermittelt worden sein, so dass ein Fahrzeug bei der Auslieferung an den Endkunden bereits den Vorgabewert für die Vorgabe-Übertragungszeit enthält und lediglich bei dem allerersten Start des Fahrzeugnetzes (noch bei dem Hersteller) eine längere Synchronisationszeit anfällt, da die Übertragungszeit erst durch Ausführung eines DelayRequest-Zyklus gegebenenfalls mit der standardkonformen verringerten Aussendefrequenz durchgeführt werden muss.

In diesem Zusammenhang kann es ergänzend vorteilhaft sein, wenn die Vorgabe-Übertragungszeit aus einer gegebenen Fahrzeugkonfiguration ermittelt bzw. berechnet wird. In einem Fahrzeugnetz ist die Zeit der Signalübermittlung aufgrund der Laufwege klein. Maßgeblicher Faktor für die Verzögerungszeiten bei der Aussendung und Übertragung von Telegrammen ist die Verarbeitungsgeschwindigkeit der Knoten, die insbesondere hard- und softwareabhängig ist. Diese Informationen können durch Auslesen der Konfigurations- und Firmwareversionen der beteiligten Knoten ausgelesen und in einer geeignet parametrierten Berechnung verwendet werden, so dass je nach in dem Fahrzeug vorgesehen Knoten, d. h. der Fahrzeugkonfiguration, eine Vorgabe-Übertragungszeit auch theoretisch ermittelt werden kann.

Eine weitere Reduktion der Synchronisationszeit kann erreicht werden, wenn das Aussenden des Delay-Request-Telegramms durch den Slave-Knoten unmittelbar nach Empfang des Synchronisations-Telegramms erfolgt. Unmittelbar nach Empfang des Synchronisations-Telegramms soll dabei bedeuten, dass der Slave-Knoten nach Empfangen und Erkennen des Synchronisations-Telegramms in dem nächsten Verarbeitungsschritt ohne Zwischenschaltung weitere Verarbeitungsschritte das Delay-Request-Telegramm aussendet. Dabei kann das Synchronisations-Telegramm technisch auch durch zwei aufeinanderfolgende Telegramme gebildet sein, nämlich durch ein Syn-Telegramm, das zum Zeitpunkt $t_1$ der Master-Uhr durch den Master-Knoten ausgesendet und zum Zeitpunkt $t_2$ der Slave-Uhr in dem Salve-Knoten empfangen wird, sowie durch ein Follow-Up-Telegramm das nach dem Sync-Telegramm durch den Master-Knoten ausgesendet wird und die Uhrzeit $t_1$ als Information enthält, damit diese Uhrzeit für die Durchführung des Synchronisations-Algorithmus in dem SlaveKnoten zur Verfügung steht. Das unmittelbare Aussenden des Delay-Request-Telegramms nach Empfang des SynchronisationsTelegramms kann entweder nach Empfang des Sync-Telegramms oder nach Empfang des Follow-Up-Telegramms erfolgen, wobei das Aussenden nach dem Sync-Telegramm dann zwischen dem Empfang des Sync-Telegramms und des Follow-UpTelegramms liegt.

Gemäß einer weiteren Verfahrensvariante kann auch vorgesehen sein, dass die (nach dem Start zunächst hohe, der Sendefrequenz der Synchronisationstelegramme entsprechende) Sendefrequenz der Delay-Request-Telegramme nach dem vorgegebenen Zeitraum und/oder nach erfolgter Synchronisation der Slave-Uhr auf die Master-Uhr verringert wird, um die Belastung des Übertragungskanals zu reduzieren, d. h. sobald eine Synchronisation tatsächlich erfolgt ist oder nach den Umständen hätte erfolgt sein müssen. Vorzugsweise wird die Sendefrequenz dann auf eine dem Standard entsprechende Sendefrequenz von beispielsweise einer Aussendung pro Sekunde reduziert (in diesem Betrieb kann dann die standardkonforme Synchronisation weiter erfolgen, um die Uhren im laufenden Betrieb auch synchron zu halten).

Erfindungsgemäß kann in einer weiteren Variante des Synchronisationsverfahrens nach dem Starten der Knoten des Fahrzeugs bei der Synchronisation der Uhren in dem Knoten anstelle einer Bestimmung des besten Master-Knotens BMC) durch Austausch von Announce-Telegrammen zwischen den startenden Knoten, wobei jeder Knoten ein Announce-Telegramm mit Informationen über Eigenschaften seiner Uhr aussendet und die Announce-Telegramme anderer Knoten empfängt und auswertet, um die qualitativ beste Uhr zu ermitteln und zur Master-Uhr zu bestimmen, eine Master-Uhr fest vorgegeben sein, die bei dem Starten des Fahrzeugsystems die Master-Uhr für alle Knoten ist und die Zeitbasis darstellt, auf die sich die anderen Uhren (zumindest zunächst) synchronisieren. Alle Netzwerkknoten kennen somit vor dem Hochstart des Systems schon die beste Uhr und konfigurieren ihre Ports dementsprechend in den vorher definierten Zustand. Nach einer ersten Synchronisation kann das auch als Best Master Clock-Verfahren (BMC) zur Ermittlung der qualitativ besten Uhr in dem Fahrzeugnetz bzw. Netzwerk durchgeführt werden, wobei die Master-Uhr dann im laufenden Betrieb entsprechend angepasst wird.

Als Alternative oder zusätzlich kann auch vorgesehen sein, dass nach dem Starten der Knoten des Fahrzeugs bei der Synchronisation der Uhren in den Knoten jeder Knoten ein Announce-Telegramm mit Informationen über Eigenschaften seiner Uhr aussendet und die Announce-Telegramme anderer Knoten empfängt und auswertet, um die qualitativ beste Uhr zu ermitteln und zur Master-Uhr zu bestimmen (Durchführen des Best Master Clock-Verfahrens). Dabei ist erfindungsgemäß vorgesehen, dass die Sendefrequenz der Announce-Telegramme zumindest für einen vorgegebenen Zeitraum nach dem Starten der Knoten des Fahrzeugs der Sendefrequenz der Synchronisations-Telegramme entspricht, so dass im Vergleich zu einer Standard-Ausführung des Best Master Clock-Verfahrens aufgrund der Erhöhung der Aussendefrequenz eine wesentlich schnellere Synchronisation erreicht werden kann. Auch hier wurde erfindungsgemäß festgestellt, dass in einem Fahrzeugnetz diese Kommunikationsbelastung beim Neustart des Netzes verkraftbar ist.

Es hat sich ferner herausgestellt, dass der SynchronisationsZyklus unter Beibehaltung des Delay-Request-Zyklus und des Best Master Clock-Verfahrens besonders schnell durchgeführt wird, wenn das Announce-Telegramm durch jeden Slave-Knoten unmittelbar nach dem Aussenden des Delay-Request-Telegramms und durch den Master-Knoten unmittelbar nach dem Aussenden des Synchronisations-Telegramms ausgesendet wird, wobei das unmittelbare Aussenden auch in diesem Fall wieder bedeutet, dass in dem jeweiligen Knoten bzw. der Recheneinheit des jeweiligen Knotens dies nach dem jeweils auslösenden Ereignis (Aussenden des Delay-Request-Telegramms bzw. des Synchronisations-Telegramms) ohne andere zwischengeschaltete Aktionen erfolgt.

Um auch hier die Belastung des Übertragungskanal zu reduzieren, kann erfindungsgemäß vorgesehen sein, dass die Sendefrequenz der Announce-Telegramme nach dem vorgegebenen Zeitraum und/oder nach erfolgter Bestimmung der Master-Uhr verringert wird, vorzugsweise auf die standardkonforme Sendefrequenz von etwa einer Aussendung pro Sekunde.

Die Erfindung betrifft ferner einen Knoten in einem Fahrzeugnetz eines Kraftfahrzeugs mit einem Mikroprozessor, der zur Durchführung eines Kommunikationsprotokolls eingerichtet ist, damit der Knoten an einer Kommunikation verschiedener Knoten in dem Kraftfahrzeug bzw. dem Fahrzeugnetz teilnehmen kann. Derartige Knoten sind in Fahrzeugen häufig Steuergeräte, die in dem Fahrzeug kommunizieren, um bestimmte Informationen, wie beispielsweise Sensordaten, erkannte Gefahrensituationen oder dergleichen, auszutauschen.

Erfindungsgemäß ist vorgesehen, dass der Mikroprozessor des Knotens zur Durchführung des vorbeschriebenen Verfahrens zur Synchronisation von Uhren oder Teilen hiervon eingerichtet ist.

Entsprechend betrifft die vorliegende Erfindung auch ein Computerprogrammprodukt mit Programmcodemitteln, welche dazu geeignet sind, nach Einrichtung auf einem Mikroprozessor eines Knotens eines Fahrzeugnetzes das vorbeschriebene Verfahren oder Teile hiervon zur Synchronisation von Uhren in einem Fahrzeugnetz, in welches der Knoten eingebunden ist, auszuführen. Diese Programmcodemittel können beispielsweise als Firmware auf die Knoten aufspielbar sein.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschrieben und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig.1 ein Synchronisationsverfahren zur Synchronisation einer Slave-Uhr auf eine Master-Uhr in einem schematischen zeitlichen Ablauf und

Fig. 2 die Durchführung eines Best Master Clock-Verfahrens zum Ermitteln der qualitativ besten Uhr in dem Netzwerk in einem schematischen zeitlichen Ablauf.

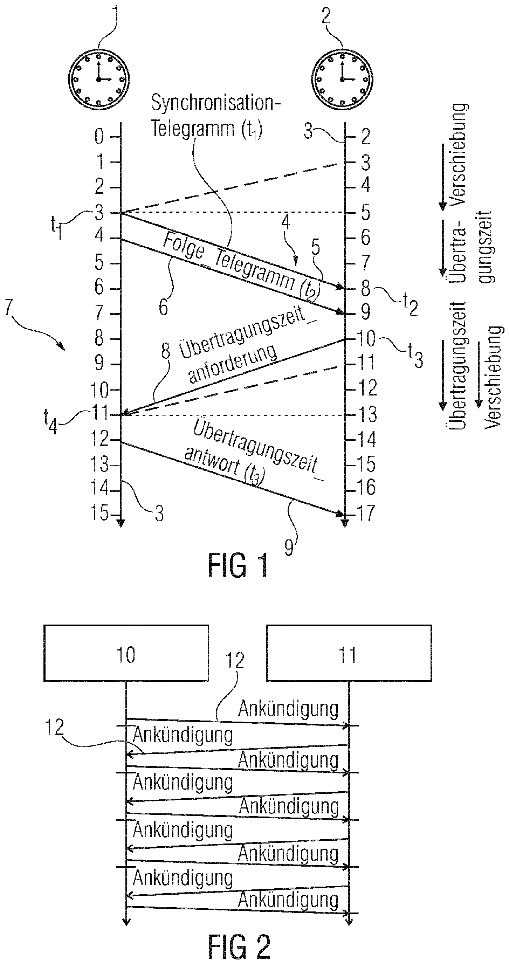

In Fig. 1 sind eine Master-Uhr 1 eines Master-Knotens und eine Slave-Uhr 2 eines Slave-Knotens jeweils mit der der Master-Uhr 1 und der Slave-Uhr 2 zugeordneten Zeitbasis 3 gezeigt, die in Fig. 1 als sich in beliebigen Einheiten unter der Master-Uhr 1 bzw. der Slave-Uhr 2 erstreckender Zeitstrahl dargestellt ist.

Im Rahmen des vorgeschlagenen Synchronisationsverfahrens in einem Fahrzeugnetz, in dem die Knoten über ein nicht per se synchronisiertes Kommunikationsprotokoll miteinander kommunizieren, ist vorgesehen, dass der Master-Knoten mit der Master-Uhr 1 Synchronisations-Telegramme 4 aussendet, die von dem Slave-Knoten mit der Slave-Uhr 2 empfangen werden. In dem dargestellten Beispiel ist ein Synchronisations-Telegramm 4 aus zwei Telegrammen aufgebaut. Das erste Telegramm ist ein sogenanntes Sync-Telegramm 5, das zu einem Zeitpunkt $t_1$ von der Master-Uhr 1 ausgesendet und zu einem Zeitpunkt $t_2$ von der Slave-Uhr 2 empfangen wird. Da nicht alle Knoten in der Lage sind, den Sendezeitpunkt t1 des Sync-Telegramms 5 während des Versendens in dieses Telegramm mit einzubinden, sendet der Master-Knoten kurz nach Aussenden des Sync-Telegramms 5 ein Follow-Up-Telegramm 6 nach, das den Sendezeitpunkt $t_1$ in der Zeitbasis 3 der Master-Uhr 1 enthält. Die Aussendung des Follow-up-Telegramms 6 kann entfallen, wenn der Zeitpunkt $t_1$ bereits in dem Sync-Telegramm 5 enthalten ist.

In der Slave-Uhr wird der Sendezeitpunkt $t_2$ in der Zeitbasis 3 der Slave-Uhr 2 festgestellt.

Diese Synchronisations-Telegramme 4 werden von der Master-Uhr 1 mit einer einem Raster von typischerweise 10 ms oder 100 ms (Intervalle zwischen 7,8125ms bis 64s sind möglich) entsprechenden Sendefrequenz ausgesendet, so dass für zwei aufeinanderfolgende Synchronisations-Telegramme k, k+1 - bei gleicher Uhrengeschwindigkeit - die folgende Beziehung gilt:

$$t_1^{k+1} - t_1^k = t_2^{k+1} - t_2^k$$

$$t_2^{k+1} - t_1^{k+1} = t_2^k - t_1^k$$

Bei der Auswertung der Synchronisations-Telegramme 4 in dem Slave-Knoten wird dann die Uhrengeschwindigkeit der Slave-Uhr 2 an die Uhrengeschwindigkeit der Master-Uhr 1 angepasst, bis die vorstehend gegebenen Differenzen gleich sind.

Um anschließend die Zeitverschiebung zwischen der Master-Uhr 1 und der Slave-Uhr 2 zu korrigieren, ist es notwendig, die Übertragungszeit für ein Telegramm zwischen dem Master-Knoten 1 und dem Slave-Knoten 2 zu berücksichtigen, wobei aus der bekannten Übertragungszeit für ein Telegramm auf die Zeitverschiebung zwischen der Master-Uhr 1 und der Slave-Uhr 2 rückgeschlossen werden kann.

Der grundsätzliche Zusammenhang lässt sich dem in Fig. 1 auch dargestellten Delay-Request-Zyklus 7 entnehmen, bei dem der Slave-Knoten mit der Slave-Uhr 2 ein Delay-Request-Telegramm 8 zu einem Zeitpunkt $t_3$ aussendet, das zu einem Zeitpunkt $t_4$ von der Master-Uhr 1 empfangen wird. In einem Delay-Response-Telegramm 9 sendet die Master-Uhr 1 die Empfangszeit $t_4$ an die Slave-Uhr 2 zurück. So wird unter Einbeziehung der Synchronisations-Telegramme insgesamt eine Rundsendung eines Telegramms von der Slave-Uhr 2 zu der Master-Uhr 1 und von der Master-Uhr 1 zu der Slave-Uhr 2 erreicht, wobei in dem dargestellten Beispiel hierfür die Zeiten $t_1$, $t_2$ sowie $t_3$, $t_4$ Verwendung finden.

Die Übertragungszeit wird unter der Annahme einer symmetrischen Übertragung in beide Kommunikationsrichtungen durch die nachfolgend dargestellte Gleichung Delay beschrieben:

$$Delay = \frac{(t_2 - t_1) + (t_4 - t_3)}{2}.$$

Sobald der Delay bekannt ist, lässt sich die Zeitverschiebung zwischen der Master-Uhr und der Slave-Uhr entsprechend dem Verhältnis Offset:

$$Offset = \frac{(t_2 - t_1) - (t_4 - t_3)}{2}$$

bestimmen.

In dem Standard IEEE802.1AS wird der Delay-Request-Zyklus 7 allerdings nur mit einer Frequenz von 1 Hz ausgeführt, d. h. ein Delay-Request-Telegramm 8 wird nur einmal pro Sekunde ausgesendet. Dies führt bei einem Aufstart des Systems, d. h. einem Neustart aller Knoten des Fahrzeugnetzes, zu einer sehr langen Synchronisationszeit.

Daher ist vorgeschlagen, für die Übertragungszeit (Delay) eine Vorgabe-Übertragungszeit zu verwenden, die dem System bei dem Aufstart bereits vorgegeben ist. Der Offset zwischen der Master-Uhr 1 und der Slave-Uhr 2 lässt sich damit einfach aus dem Empfang eines Synchronisations-Telegramms 5 herleiten, wie aus der nachfolgenden Gleichung ersichtlich:

$$Offset = (t_2 - t_1) - Delay$$

Somit kann nach dem erstmaligen Eintreffen des Synchronisations-Telegramms 4, beispielsweise nach dem Erhalt des Sync-Telegramms 5, mit dem Wert der Vorgabe-Übertragungszeit (als Variable "Delay") eine Uhrensynchronisation bereits erfolgen, ohne dass auf eine Berechnung des Delay gewartet werden muss. Das heißt, die tatsächliche Ausführung des DelayRequest-Zyklus 7 könnte entfallen oder nur zur Korrektur des Delays verwendet werden.

Die Vorgabe-Übertragungszeit kann auf verschiedene Weise ermittelt werden. Eine geeignete Möglichkeit ist es, das Ergebnis eines Delay-Request-Zyklus 7 des oder eines vorherigen Einschaltzyklus (Power Cycle) des Netzwerks zu übernehmen. Eine andere Möglichkeit liegt darin, einen initialen Wert aufgrund der gegebenen Fahrzeugkonfigurationen, d. h. unter Berücksichtigung der teilnehmenden Knoten sowie deren Hard- und Software, zu ermitteln.

Sofern eine Master-Uhr 1 bekannt ist, welche die Synchronisations-Telegramme 4 aussendet, kann erfindungsgemäß also eine Synchronisation der Uhren bereits nach wenigen Millisekunden erreicht werden.

Ergänzend kann vorgeschlagen werden, den Synchronisationszyklus wie in Fig. 1 dargestellt auch bei einem Neustart des Systems vollständig auszuführen, d. h. sowohl ein SynchronisationsTelegramm 4 auszusenden als auch einen Delay-Request-Zyklus 7 durchzuführen, wobei das Delay-Request-Telegramm 8 unmittelbar nach Erhalt des Synchronisations-Telegramms 4 ausgesendet wird, d. h. die Sendefrequenz der Delay-Request-Telegramme 8 der Sendefrequenz der Synchronisations-Telegramme 4 zumindest für einen vorgegebenen Zeitraum nach dem Starten (Neustart) der Knoten des Fahrzeugs entspricht. Hierdurch kann der vollständige Synchronisationszyklus (einschließlich einer Ermittlung der Übertragungszeit in dem Delay-Request-Zyklus 7) auch in einer deutlich kürzeren Zeit erfolgen im Vergleich zu dem Fall, in dem die Sendefrequenz der Delay-Request-Telegramme 8 deutlich niedriger ist als die Sendefrequenz der SynchronisationsTelegramme 4.

Die hohe Durchführungsrate der Delay-Request-Zyklen 7 kann erfindungsgemäß nach einem vorgegebenen Zeitraum zwischen 1 und 100 Sekunden vorzugsweise etwa 2 bis 10 Sekunden oder nach einer erfolgreichen Synchronisation abgebrochen werden.

Üblicherweise wird im Rahmen des IEEE802.1AS-Protokolls ferner ein Best Master Clock-Verfahren (BMC) durchgeführt, in welchem das Netzwerk die qualitativ beste Uhr 1, 2 in seinem Segment selbsttätig ermittelt und als Master-Uhr 1 festlegt. Dazu tauschen sämtliche Knoten 10, 11 in dem Fahrzeugnetz sogenannte Announce-Telegramme 12 aus, in denen gespeicherte Eigenschaften ihrer Uhren 1, 2 übertragen werden. Durch Auswerten dieser Announce-Telegramme 12 kann so die beste Uhr als Master-Uhr 1 im Netzwerk festgelegt werden. Üblicherweise werden die Announce-Telegramme 12 allerdings auch nur mit einer Frequenz von 1 Hz ausgesendet.

Da dies bei einem Neustart des Systems dazu führt, dass die Bestimmung der Master-Uhr 1 sehr lange dauert und damit die Erstsynchronisation nicht zügig erfolgen kann, wird erfindungsgemäß unter Verwendung desselben Erfindungsgedanken wie bei der zuvor beschriebenen Synchronisation, zunächst eine Master-Uhr 1 bei Neustart des Systems fest vorgegeben, so dass das in Fig. 2 dargestellte Best Master Clock-Verfahren (BMC) für die erste Synchronisation der an dem Netzwerk teilnehmenden Knoten nicht ausgeführt zu werden braucht.

Alternativ oder zusätzlich ist es ebenso möglich, bei einem Neustart des Systems das in Fig. 2 dargestellte auch Best Master Clock-Verfahren durch Austausch der Announce-Telegramme für einen vorbestimmten Zeitraum mit einer erhöhten Sendefrequenz durchzuführen, wobei die Sendefrequenz vorzugsweise der Sendefrequenz der Synchronisations-Telegramme 4 entspricht und beispielsweise unmittelbar im Anschluss an die Durchführung des Delay-Request-Zyklus 7 stattfinden kann.

Wenn dagegen die beste Uhr (auch als Grandmaster bezeichnet) bereits anfänglich an eine festgesetzt wird, kennen alle Netzwerkteilnehmer ihre Rolle als Master oder Slave und senden die ihrer Rolle entsprechenden Nachrichten bei dem Neustart des Systems sofort aus. In der Rolle der Master-Uhr 1 werden also die Synchronisations-Nachrichten 4 und in der Rolle der Slave-Uhr 2 die Delay-Request-Telegramme 8 versendet. Die AnnounceTelegramme 12 können beim Neustart des Systems zunächst weggelassen werden, was zu einer besonders schnellen Synchronisation führt.

Im weiteren Verfahren können die Announce-Telegramme 12 dann entsprechend dem Standard gesendet werden, um im laufenden System jeweils die beste Uhr als Master-Uhr 1 festzulegen.

## Patentansprüche

1. Verfahren zur Synchronisation von Uhren (1, 2) in Knoten eines Fahrzeugnetzes eines Kraftfahrzeugs, in dem die Knoten über ein nicht synchronisiertes Kommunikationsprotokoll miteinander kommunizieren, bei dem ein Master-Knoten mit einer Master-Uhr (1) Synchronisations-Telegramme aussendet, die in einem Slave-Knoten mit Slave-Uhr (2) ausgewertet werden, wobei der Takt des Slave-Knotens bzw. der Slave-Uhr (1) an den Takt des Master-Knotens bzw. der Master-Uhr (2) angepasst wird, und bei dem unter Berücksichtigung der Übertragungszeit für ein Telegramm zwischen dem Master-Knoten und dem Slave-Knoten eine Zeitverschiebung zwischen der Master-Uhr (1) und der Slave-Uhr (2) korrigiert wird, wobei von dem Slave-Knoten ein Delay-Request-Telegramm (8) ausgesendet wird, dessen Empfangszeit ($t_4$) in dem Master-Knoten erfasst und von dem Master-Knoten als Delay-Response-Telegramm (9) an den Slave-Knoten zurückgesendet wird, in welchem dann die Übertragungszeit für ein Telegramm zwischen dem Master-Knoten und dem Slave-Knoten bestimmt wird, **dadurch gekennzeichnet, dass** die Sendefrequenz der Delay-Request-Telegramme (8) der Sendefrequenz der Synchronisations-Telegramme (4) zumindest für einen vorgegebenen Zeitraum nach dem Starten der Knoten des Fahrzeugs entspricht, wodurch die Sendefrequenz der Delay-Request-Telegramme während des vorgegebenen Zeitraums erhöht wird.

2. Verfahren nach Anspruch 1, **dadurch gekennzeichnet, dass** das Aussenden des Delay-Request-Telegramms (8) unmittelbar nach Empfang des Synchronisations-Telegramms (4) erfolgt.

3. Verfahren nach einem der vorhergehenden Ansprüche, **dadurch gekennzeichnet, dass** die Sendefrequenz der Delay-Request-Telegramme (8) nach dem vorgegebenen Zeitraum und/oder nach erfolgter Synchronisation der Slave-Uhr (2) auf die Master-Uhr (1) verringert wird.

4. Verfahren nach einem der vorhergehenden Ansprüche, **dadurch gekennzeichnet, dass** nach dem Starten der Knoten des Fahrzeugs bei der Synchronisation der Uhren (1, 2) in den Knoten eine Master-Uhr (1) fest vorgeben ist.

5. Verfahren nach einem der vorhergehenden Ansprüche, **dadurch gekennzeichnet, dass** nach dem Starten der Knoten des Fahrzeugs bei der Synchronisation der Uhren (1, 2) in den Knoten jeder Knoten ein Announce-Telegramm (12) mit Informationen zu seiner Uhr aussendet und die Announce-Telegramme (12) anderer Knoten empfängt und auswertet, um die qualitativ beste Uhr (1, 2) zu ermitteln und zur Master-Uhr (1) zu bestimmen, wobei die Sendefrequenz der Announce-Telegramme (12) zumindest für einen vorgegebenen Zeitraum nach dem Starten der Knoten des Fahrzeugs der Sendefrequenz der Synchronisations-Telegramme (4) entspricht.

6. Verfahren nach Anspruch 5, **dadurch gekennzeichnet, dass** das Announce-Telegramm (12) durch jeden Slave-Knoten unmittelbar nach dem Aussenden eines Delay-Request-Telegramms (8) und durch den Master-Knoten unmittelbar nach dem Aussenden eines Synchronisations-Telegramms (4) ausgesendet wird.

7. Verfahren nach einem der Ansprüche 5 oder 6, **dadurch gekennzeichnet, dass** die Sendefrequenz der Announce-Telegramme (12) nach dem vorgegebenen Zeitraum und/oder nach erfolgter Bestimmung der Master-Uhr verringert wird.

8. Knoten in einem Fahrzeugnetz eines Kraftfahrzeugs mit einem Mikroprozessor, der zur Durchführung eines Kommunikationsprotokolls eingerichtet ist, damit der Knoten an einer Kommunikation verschiedener Knoten in dem Kraftfahrzeug teilnehmen kann, **dadurch gekennzeichnet, dass** der Mikroprozessor zur Durchführung des Verfahren zur Synchronisation von Uhren (1, 2) gemäß einem der Ansprüche 1 bis 7 eingerichtet ist.

9. Computerprogrammprodukt mit Programmcodemitteln, welche dazu geeignet sind, nach Einrichtung auf einem Mikroprozessor eines Knotens eines Fahrzeugnetzes ein Verfahren zur Synchronisation von Uhren (1, 2) gemäß einem der Ansprüche 1 bis 7 in einem Fahrzeugnetz, in welches der Knoten eingebunden ist, auszuführen.

**Claims**

1. Method for synchronizing clocks (1, 2) in nodes of a vehicle network of a motor vehicle, in which the nodes communicate with one another via an unsynchronized communication protocol, in which a master node having a master clock (1) sends out synchronization messages that are evaluated in a slave node having a slave clock (2), wherein the timing of the slave node or slave clock (1) is adapted to the timing of the master node or master clock (2), and in which a time offset between the master clock (1) and the slave clock (2) is corrected taking into account the transmission time for a message between the master node and the slave node, wherein a delay request message (8) is sent out by the slave node, the reception time ($t_4$) of which is recorded in the master node, and is sent back, by the master node, in the form of a delay response message (9), to the slave node, in which the transmission time for a message between the master node and the slave node is then defined, **characterized in that** the sending frequency of the delay request messages (8) corresponds to the sending frequency of the synchronization messages (4) at least for a predefined period after the nodes of the vehicle have been started, as a result of which the sending frequency of the delay request messages is increased during the predefined period.

2. Method according to Claim 1, **characterized in that** the delay request message (8) is sent out immediately after the synchronization message (4) has been received.

3. Method according to either of the preceding claims, **characterized in that** the sending frequency of the delay request messages (8) is reduced after the predefined period and/or after the slave clock (2) has been synchronized with the master clock (1).

4. Method according to one of the preceding claims, **characterized in that**, after the nodes of the vehicle have been started, during the synchronization of the clocks (1, 2), a master clock (1) is fixedly predefined in the nodes.

5. Method according to one of the preceding claims, **characterized in that**, after the nodes of the vehicle have been started, during the synchronization of the clocks (1, 2) in the nodes, each node sends out an Announce message (12) containing information about its clock, and receives and evaluates the Announce messages (12) from other nodes in order to determine the best quality clock (1, 2) and to define said clock to be the master clock (1), wherein the sending frequency of the Announce messages (12) corresponds to the sending frequency of the synchronization messages (4) at least for a defined period after the nodes of the vehicle have been started.

6. Method according to Claim 5, **characterized in that** the Announce message (12) is sent out by each slave node immediately after a delay request message (8) has been sent out and by the master node immediately after a synchronization message (4) has been sent out.

7. Method according to either of Claims 5 and 6, **characterized in that** the sending frequency of the Announce messages (12) is reduced after the predefined period and/or after the master clock has been defined.

8. Node in a vehicle network of a motor vehicle having a microprocessor that is configured to implement a communication protocol in order that the node is able to take part in communication between different nodes in the motor vehicle, **characterized in that** the microprocessor is configured to perform the method for synchronizing clocks (1, 2) according to one of Claims 1 to 7.

9. Computer program product comprising program code means that, after installation on a microprocessor of a node of a vehicle network, are suitable for executing a method for synchronizing clocks (1, 2) according to one of Claims 1 to 7 in a vehicle network in which the node is integrated.

**Revendications**

1. Procédé de synchronisation d'horloges (1, 2) dans des noeuds d'un réseau de véhicule d'un véhicule automobile, dans lequel les noeuds communiquent entre eux par le biais d'un protocole de communication non synchronisé, avec lequel un noeud maître pourvu d'une horloge maître (1) émet des télégrammes de synchronisation qui sont interprétés dans un noeud esclave pourvu d'une horloge esclave (2), le rythme du noeud esclave ou de l'horloge esclave (1) étant adapté au rythme du noeud maître ou de l'horloge esclave (2), et avec lequel, en tenant compte du temps de transmission pour un télégramme entre le noeud maître et le noeud esclave, un décalage temporel entre l'horloge maître (1) et l'horloge esclave (2) est corrigé, un télégramme de demande de délai (8) étant émis par le noeud esclave, dont le moment de réception ($t_4$) est détecté dans le noeud maître et renvoyé par le noeud maître au noeud esclave en tant que télégramme de réponse de délai (9), dans lequel est ensuite spécifié le temps de transmission pour un télégramme entre le noeud maître et le noeud esclave, **caractérisé en ce que** la fréquence d'émission des télégrammes de réponse de retard (8) correspond à la fréquence d'émission des télégrammes de synchronisation (4) au moins pendant une période prédéfinie après le démarrage des noeuds du véhicule, moyennant quoi la fréquence d'émission des télégrammes de réponse de retard pendant la période prédéfinie est augmentée.

2. Procédé selon la revendication 1, **caractérisé en ce que** l'émission du télégramme de demande de délai (8) a lieu immédiatement après la réception du télégramme de synchronisation (4).

3. Procédé selon l'une des revendications précédentes, **caractérisé en ce que** la fréquence d'émission des télégrammes de demande de délai (8) est diminuée après la période prédéfinie et/ou après que la synchronisation de l'horloge esclave (2) sur l'horloge maître (1) a été effectuée.

4. Procédé selon l'une des revendications précédentes, **caractérisé en ce qu'**après le démarrage des noeuds du véhicule, lors de la synchronisation des horloges (1, 2) dans les noeuds, une horloge maître (1) est prédéfinie de manière fixe.

5. Procédé selon l'une des revendications précédentes, **caractérisé en ce qu'**après le démarrage des noeuds du véhicule, lors de la synchronisation des horloges (1, 2) dans les noeuds, chaque noeud émet un télégramme d'annonce (12) comprenant des informations à propos de son horloge et reçoit et interprète les télégrammes d'annonce (12) d'autres noeuds afin de déterminer l'horloge (1, 2) qualitativement la meilleure et la spécifier en tant qu'horloge maître (1), la fréquence d'émission des télégrammes d'annonce (12) correspondant, au moins pendant une période prédéfinie après le démarrage des noeuds du véhicule, à la fréquence d'émission des télégrammes de synchronisation (4).

6. Procédé selon la revendication 5, **caractérisé en ce que** le télégramme d'annonce (12) est émis par chaque noeud esclave immédiatement après l'émission d'un télégramme de demande de délai (8) et par le noeud maître immédiatement après l'émission d'un télégramme de synchronisation (4).

7. Procédé selon l'une des revendications 5 ou 6, **caractérisé en ce que** la fréquence d'émission des télégrammes d'annonce (12) est diminuée après la période prédéfinie et/ou après que la spécification de l'horloge maître a été effectuée.

8. Noeud dans un réseau de véhicule d'un véhicule automobile comprenant un microprocesseur, lequel est conçu pour mettre en oeuvre un protocole de communication afin que le noeud puisse participer à une communication de différents noeuds dans le véhicule automobile, **caractérisé en ce que** le microprocesseur est conçu pour mettre en oeuvre le procédé de synchronisation d'horloges (1, 2) selon l'une des revendications 1 à 7.

9. Produit de programme informatique comprenant des moyens de code de programme, lesquels sont appropriés pour mettre en oeuvre, après l'installation sur un microprocesseur d'un noeud d'un réseau de véhicule, un procédé de synchronisation d'horloges (1, 2) selon l'une des revendications 1 à 7, dans un réseau de véhicules dans lequel le noeud est intégré.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2246677 A
- EP 0016447 A1
- WO 2006044139 A
- US 5623483 A


**In der Beschreibung aufgeführte Nicht-Patentliteratur**

- **VON ZINNER et al.** A comparison of time synchronization in AVB and FlexRay in-vehicle networks. *Proceedings of the ninth workshop on Intelligent solutions in embedded systems,* 2011
- **VON MURAKAMI et al.** Improvement of synchronization accuracy in IEEE 1588 using a queuing estimation method. *International symposium on precision clock synchronization for measurement,* 2009
- **VON INGRAM et al.** Use of IEEE 1588-2008 for a sampled value process bus in transmission substations. *Instrumentation and measurement technology conference (i2mtc),* 2011
- **HYUNG-TAEK LIM et al.** IEEE 802.1AS time synchronization in a switched Ethernet based in-car network. *VEHICULAR NETWORKING CONFERENCE (VNC), IEEE,* 14. November 2011, ISBN 978-1-4673-0049-0, 147-154